# EUROPÄISCHE PATENTSCHRIFT

(11) **EP 4 183 926 B1**
(45) Veröffentlichungstag und Bekanntmachung des Hinweises auf die Patenterteilung: **26.11.2025**
(21) Anmeldenummer: 22175477.3
(22) Anmeldetag: 25.05.2022
(51) Int. Cl.: E01C 19/48

(54) **ELEKTRIFIZIERTE STRASSENBAUMASCHINE**
ELECTRIFIED ROAD CONSTRUCTION MACHINE
MACHINE ÉLECTRIFIÉE DE CONSTRUCTION ROUTIÈRE

(30) Priorität: 18.11.2021 EP 21209031
(43) Veröffentlichungstag der Anmeldung: 24.05.2023
(73) Patentinhaber: Joseph Vögele AG, 67067 Ludwigshafen (DE)
(72) Erfinder: Erdtmann, Bernhard, 68535 Edingen Neckarhausen (DE); Eul, Achim, 68305 Mannheim (DE); Weiser, Ralf, 68526 Ladenburg (DE); Pontius, Johannes, 66839 Schmelz (DE)
(74) Vertreter: Grünecker Patent- und Rechtsanwälte PartG mbB

(56) Entgegenhaltungen:
- EP-A1- 2 333 158
- WO-A1-2020/200509
- WO-A2-2012/062384
- JP-A- 2019 157 395

## Beschreibung

Die Erfindung bezieht sich auf eine Straßenbaumaschine in Form eines Straßenfertigers oder eines Beschickerfahrzeugs für einen Straßenfertiger gemäß dem Oberbegriff des Anspruchs 1.

Ein derartiger Straßenfertiger ist aus der EP 1 118 714 B1 bekannt und ein derartiger Beschicker geht aus der EP 2 110 341 A1 hervor.

EP 0 628 661 B1 offenbart einen Straßenfertiger mit einem Verbrennungsmotor, der zur Stromerzeugung einen damit verbundenen Drehstromgenerator antreibt.

WO 2011/135846 A1 offenbart eine mittels einer internen und einer externen Stromquelle bestrombare Heizeinrichtung eines Straßenfertigers.

Die JP 2019 157 395 A offenbart eine Straßenbaumaschine gemäß dem Oberbegriff von Anspruch 1.

Straßenfertiger werden dazu eingesetzt, auf einem Platz, einem Weg oder einer Straße einen Belag aus Einbaumischgut bzw. Einbaumaterial oder Asphaltmischgut aufzubringen, beispielsweise aus Beton, bituminösem Einbaumischgut oder Asphalt. Solch ein Straßenfertiger weist üblicherweise einen Gutbunker auf, um eine bestimmte Menge von Einbaumischgut zu speichern. Straßenfertiger dieser Art haben eine Vielzahl von elektrischen Verbrauchern, unter denen insbesondere die Heizeinrichtungen für die Glättbleche, Tamper und dgl. in der Einbaubohle durchaus einen nennenswerten Stromverbrauch haben. Wenn die Speicherkapazität für Einbaumaterial erhöht werden soll, wird ein Beschickerfahrzeug in Arbeitsrichtung vor den Straßenfertiger gesetzt. Das Beschickerfahrzeug umfasst einen weiteren Gutbunker sowie eine Fördereinrichtung, um Einbaumischgut aus dem Beschicker-Gutbunker in den Gutbunker des Straßenfertigers zu transportieren. Neben der Fördereinrichtung können als weitere Arbeitsaggregate zum Beispiel Abstreifer, Rüttler oder eine Heizeinrichtung vorgesehen sein, um den Förderprozess zu verbessern und das zu frühe Erkalten und Erstarren des üblicherweise heißen Einbaumischguts zu verhindern.

Die elektrischen Verbraucher der Straßenbaumaschine werden herkömmlicherweise von einem Generator mit Energie versorgt, der seinerseits von einer Primärantriebsquelle in Form eines Verbrennungsmotors, meist ein Dieselmotor, angetrieben wird. Der Dieselmotor wird von einem Kraftstofftank mit Brennstoff versorgt. In einigen Straßenbaumaschinen wird der Generator an einen Antriebsausgang eines Pumpenverteilergetriebes (PVG) angeordnet und von diesem Pumpenverteilergetriebe angetrieben. Nachteilig daran ist, dass bei der Stromerzeugung über das Pumpenverteilergetriebe Verluste entstehen. Dies erhöht den Kraftstoffverbrauch und die Umweltbelastung durch Abgase.

Aufgabe der Erfindung ist es, eine energieeffiziente und umweltfreundliche Straßenbaumaschine in Form eines Straßenfertigers oder eines Beschickerfahrzeugs für einen Straßenfertiger zur Verfügung zu stellen.

Diese Aufgabe wird durch die Merkmale des Anspruchs 1 gelöst.

Die Erfindung betrifft eine Straßenbaumaschine in Form eines Straßenfertigers oder eines Beschickerfahrzeugs zum Fördern von Einbaumischgut zu einem Straßenfertiger. Die Straßenbaumaschine ist selbstfahrend und weist eine Primärantriebsquelle, einen Gutbunker, mindestens ein Arbeitsaggregat, und mindestens einen elektrischen Verbraucher zum Heizen des Arbeitsaggregats auf. Erfindungsgemäß weist die Straßenbaumaschine ein Energieversorgungssystem mit mindestens einem mittels außerhalb der Straßenbaumaschine erzeugten elektrischen Stroms aufladbaren, elektrischen Energiespeicher auf, der an der Straßenbaumaschine als interne Stromquelle zur direkten Stromversorgung des elektrischen Verbrauchers konfiguriert ist.

Der zum Aufladen des elektrischen Energiespeichers verwendete Strom kann in Form von elektrischer Energie anhand einer externen Stromquelle, beispielsweise mittels eines externen Stromaggregats, eines externen Energiespeichers und/oder einer Ladesäule erzeugt bzw. zur Verfügung gestellt werden. Dabei bedeutet "extern", dass die Stromquelle außerhalb der Straßenbaumaschine liegt und zur externen Stromerzeugung keine Aggregate der Straßenbaumaschine eingesetzt werden, sprich die externe Stromerzeugung vor allem nicht vom Betrieb der Primärantriebsquelle der Straßenbaumaschine abhängig ist. Dadurch kann der von der Primärantriebsquelle der Straßenbaumaschine herkömmlicherweise angetriebene Generator als interne oder externe, elektrische Stromquelle der Straßenbaumaschine aus dem Energieversorgungssystem für den elektrischen Verbraucher isoliert, ggf. aus der Straßenbaumaschine komplett entfernt werden.

Bei der Erfindung kommt also anhand des elektrischen Energiespeichers ein verlustarmer Betrieb des elektrischen Verbrauchers zustande. Ein Vorteil der Erfindung ist auch, dass ein Pumpenverteilergetriebe und/oder die Primärantriebsquelle nicht mehr zur Stromerzeugung bzw. Stromversorgung des elektrischen Verbrauchers angetrieben werden brauchen. Vielmehr kann bei der Erfindung der elektrische Verbraucher direkt, vor allen Dingen auch bei abgeschaltetem Fahrzeugmotor, mit extern erzeugter, elektrischer Energie betrieben werden, die im mit dem elektrischen Verbraucher verbundenen und mittels der externen Stromquelle aufladbaren Energiespeicher der Straßenbaumaschine gespeichert ist. In anderen Worten kann der elektrische Energiespeicher einen autarken Betrieb des mit ihm verbundenen elektrischen Verbrauchers an der Straßenbaumaschine herstellen. Der extern erzeugte Strom kann als elektrische Energie im Energiespeicher, beispielsweise in einem in der Straßenbaumaschine angeordneten Akkumulator, in Form von chemischer Energie gespeichert sein und bei Bedarf in elektrische Energie umgewandelt und für die direkte Stromversorgung des elektrischen Verbrauchers eingesetzt werden. Hiermit ergibt sich vom elektrischen Energiespeicher zum daran angeschlossenen elektrischen Verbraucher eine direkte, ggf. noch (frequenz-)umgerichtete, Stromversorgung über einen

Stromversorgungspfad ohne darin eingebundene, stromerzeugende (Generator), kraftstoffverbrennende (Verbrennungsmotor), zur Energieverteilung eingesetzte (PVG) und/oder stromverbrauchende (E-Motor) Aggregate. Daraus ergibt sich für den elektrischen Verbraucher ein direkter Energiespeicherbetrieb. Dies vermindert die zur Bereithaltung der Arbeitsbereitschaft des elektrischen Verbrauchers, beispielsweise einer Bohlen-Heizung, erforderlichen Energieverluste.

Der elektrische Verbraucher kann direkt an den Energiespeicher angeschlossen sein, d.h. der Strom aus dem Energiespeicher kommt direkt am Verbraucher an. Der elektrische Verbraucher kommt insbesondere als direkt akkubetriebener Verbraucher zum Einsatz. Das Energieversorgungssystem kann dazu konfiguriert sein, den elektrischen Energiespeicher mittels außerhalb der Straßenbaumaschine erzeugten elektrischen Stroms zu versorgen, d.h. diesen elektrisch aufzuladen, wobei der elektrische Verbraucher direkt als Abnehmer an den elektrischen Energiespeicher angeschlossen ist, um unmittelbar von dem elektrischen Energiespeicher mit elektrischem Strom versorgt zu werden.

Gemäß einer Ausführungsform ist der elektrische Verbraucher mittels des elektrischen Energiespeichers unabhängig von einem Betrieb der Primärantriebsquelle bestrombar. Damit kann der elektrische Verbraucher im Grunde genommen zu jeder Zeit, d.h. auch bei abgeschaltetem Motor, vom Energiespeicher aus mit Strom versorgt werden. Somit lassen sich beispielsweise Arbeitspausen der Straßenbaumaschine und/oder Transportfahrten dazu nutzten, das durch den Verbraucher beheizbare Aggregat auf einem gewünschten Temperaturniveau zu halten.

Vorzugsweise ist der elektrische Verbraucher direkt am elektrischen Energiespeicher angeschlossen. Diese Verbindung kann jedoch durchaus eine elektronische Einrichtung, beispielsweise einen Frequenzumrichter, einschließen. Allerdings werden keine stromerzeugende (Generator), kraftstoffverbrennende (Verbrennungsmotor), zur Energieverteilung eingesetzte (PVG) und/oder stromverbrauchende (E-Motor) Aggregate im Stromversorgungspfad zwischen dem Energiespeicher und dem Verbraucher eingesetzt. Dadurch hängt die Energiebilanz des Verbrauchers im Wesentlichen von der Leistungsbereitschaft des Energiespeichers ab.

Eine Variante sieht vor, dass der elektrische Energiespeicher ein Akkumulator ist. Dieser baut kompakt und ist gut zu warten. Der Energiespeicher kann auch aus mehreren Akkumulatoren zusammengebaut sein. Der Akkumulator kann durch eine externe Stromquelle aufgeladen werden, beispielsweise wenn die Straßenbaumaschine außer Betrieb ist. Vorstellbar wäre es, dass zum Aufladen des Akkumulators ein gesondertes, neben der Straßenbaumaschine herfahrendes Baustellenfahrzeug zum Einsatz kommt. Damit ließe sich der Akkumulator auch während einer Einbaufahrt laden. Gemäß einer Variante ist die externe Stromquelle eine Wechselstation, anhand welcher ein leerer durch einen vollgeladenen Akkumulator austauschbar ist.

Sinnvoll wäre es, dass der Akkumulator im Bereich des elektrischen Verbrauchers innerhalb eines wärmeisolierenden Gehäuses untergebracht ist. Durch die Nähe des Akkumulators zum Verbraucher können sich konstruktive, vor allem bauraumbezogene Vorteile ergeben,

Vorzugsweise werden sämtliche elektrischen Verbraucher der Straßenbaumaschine, darunter auch elektrische Verbraucher, die nicht zum Beheizen des Aggregats verwendet werden, ausschließlich mittels außerhalb der Straßenbaumaschine erzeugtem und vom elektrischen Energiespeicher der Straßenbaumaschine bevorrateten, elektrischen Stroms betrieben. Gemäß dieser Ausführungsform liegt die Straßenbaumaschine für seine elektrischen Verbraucher nicht mehr als Stromerzeuger vor. Somit braucht in der Straßenbaumaschine selbst kein Generator mehr zur Stromgenerierung für die Verbraucher verbaut sein.

Vorstellbar wäre es, dass der Energiespeicher zentral auf der Straßenbaumaschine, beispielsweise im Motorraum der Straßenbaumaschine, angeordnet ist, um von dort aus verschiedene elektrischen Verbraucher der Straßenbaumaschine mit Strom zu versorgen. Alternativ kann der Energiespeicher auch als Energiespeichernetzwerk vorliegen, beispielsweise mehrere zu einem Stromversorgernetzwerk verbundene, auf der Straßenbaumaschine verteilte Energiespeichermodule, beispielsweise mehrere miteinander vernetzte Akkumulatoren, aufweisen.

Vorstellbar ist es, dass der Energiespeicher dem elektrischen Verbraucher zugeordnet ist, beispielsweise auf einer Einbaubohle des Straßenfertigers platziert ist. Der elektrische Energiespeicher kann wechselbar und/oder wiederaufladbar sein. Der elektrische Energiespeicher kann ein Akkumulator sein, z.B. ein Lithium-Ionen-Akkumulator oder Nickel-Metallhydrid-Akkumulator. Der elektrische Energiespeicher kann einen oder mehrere Kondensatoren aufweisen.

Bei dem beheizbaren Arbeitsaggregat kann es sich um eine Einbaubohle, vor allen Dingen um daran zum Vorverdichten eingesetzte, bewegliche oder starr am Bohlenkörper montierte Komponenten, handeln. Bei dem Arbeitsaggregat kann es sich um eine Fördereinrichtung, einen Querverteiler, eine Lagereinrichtung, beispielsweise Querverteileraufhängung, eine Verstelleinrichtung, beispielsweise eine Nivelliereinrichtung, ein Reservoir oder einen Gutbunker handeln, um insbesondere ein Anhaften eines Einbaumischguts zu vermeiden und/oder deren Ansteuerbarkeit zu verbessern. Denkbar wäre es, dass das beheizbare Aggregat eine an der Straßenbaumaschine eingesetzte Antriebseinheit, beispielsweise ein E-Motor ist. Gemäß einer Ausführungsform ist das Aggregat ein Verteilergetriebe, beispielsweise ein Pumpenverteilergetriebe und/oder mindestens eine davon angetriebene hydraulische Komponente, beispielsweise eine Hydraulikpumpe.

Der elektrische Verbraucher kann als Heizstab ausgebildet sein, der an einer der Komponenten der Straßenbaumaschine, insbesondere im Bereich einer das Einbaugut verarbeitenden Komponente der Einbaubohle, angeordnet ist. Eine Stabform ist allerdings nicht notwendig. Denkbar wäre es, dass der elektrische Verbraucher in Form einer Heizmatte, einer Ummantelung oder als integraler Bestandteil des beheizbaren Aggregats ausgebildet ist. Vorstellbar ist, es das beheizbare Aggregat zumindest bereichsweise aus einem elektrisch leitfähigen Material ausgebildet ist, dessen spezifischer elektrischer Widerstand zum Aufheizen des Aggregats ausgenutzt wird.

Von dem elektrischen Energiespeicher können insbesondere zwei gesonderte Stromversorgungspfade wegführen. In einem ersten Stromversorgungspfad kann der elektrische Energiespeicher einen Elektromotor der Straßenbaumaschine versorgen, der ggf. mit einem Fahrwerk und/oder hydraulischen Aggregaten, optional mit diesen über ein Pumpenverteilergetriebe, verbunden ist. **In** einem zweiten Stromversorgungspfad kann der elektrische Energiespeicher direkt den elektrischen Verbraucher der Straßenbaumaschine mit Strom versorgen. Beide Stromversorgungspfade können somit unabhängig voneinander mit Strom aus dem Energiespeicher versorgt werden.

Das Energieversorgungssystem ermöglicht es, den elektrischen Energiespeicher primär mittels außerhalb der Straßenbaumaschine erzeugtem elektrischen Stroms zu versorgen. Außerdem kann der elektrische Verbraucher über den zweiten Stromversorgungspfad autark, insbesondere ohne sich aus dem ersten Stromversorgungspfad resultierende Leistungsverluste, betrieben werden.

Vorstellbar wäre es, dass der elektrische Energiespeicher von einem an der Straßenbaumaschine integrierten (Hybrid-)Antriebsstrang, der insbesondere einen Verbrennungsmotor und/oder E-Motor, einen Wasserstoffmotor und einen damit, ggf. über ein Pumpenverteilergetriebe, verbundenen Generator aufweist, mit Strom aufladbar ist. Diese Variante könnte im Notfall zum Aufladen des Energiespeichers genutzt werden, wenn daran ein Ladezustand einen vorbestimmten Schwellenwert erreicht oder diesen unterschreitet und eine Aufladung durch extern erzeugten Strom situationsbedingt nicht möglich ist.

In einer Variante der Erfindung ist das Energieversorgungssystem zum Aufladen des elektrischen Energiespeichers mit einer externen Stromquelle verbindbar. Die externe Stromquelle liegt außerhalb der Straßenbaumaschine. Beispielsweise kann es sich bei der externen Stromquelle um ein externes Stromaggregat, einen externen Energiespeicher oder eine Ladesäule eines Energieversorgers handeln. Die externe Stromquelle kann ein Stromnetz sein.

Ein Stromabnehmer kann zum Übertragen elektrischer Energie aus dem Stromnetz zu dem Energieversorgungssystem verwendet werden. Der Stromabnehmer kann eine mobile (Fahrzeug-) Einheit sein, die zur Zwischenspeicherung elektrischer Energie für den Baustelleneinsatz vorgesehen ist, sozusagen als Stromlieferfahrzeug für die Straßenbaumaschine dient.

Bei der externen Stromquelle kann es sich um eine Stromversorgung mittels eines Transportfahrzeugs zum Transportieren der Straßenbaumaschine handeln, beispielsweise einen Tieflader. Diese Variante hat den Vorteil, dass das beheizbare Arbeitsaggregat der Straßenbaumaschine bereits während des Transports der Straßenbaumaschine zur Baustelle aufgeheizt und auf Betriebstemperatur gebracht werden kann, so dass das Arbeitsaggregat und die Baumaschine sofort beim Eintreffen auf der Baustelle betriebsbereit sind und so früh wie möglich ihre Arbeit aufnehmen können. Als externe Stromquelle käme auch eine andere zusammen mit der Straßenbaumaschine auf der Baustelle eingesetzte Straßenbaumaschine in Frage.

In einer Variante der Erfindung ist das Energieversorgungssystem dazu konfiguriert, den elektrischen Verbraucher mittels der externen Stromquelle und/oder mittels der internen Stromquelle (Energiespeicher) mit elektrischem Strom zu versorgen. Je nach Verfügbarkeit kann die elektrische Leistung der jeweiligen Stromquellen prozentual aufeinander abgestimmt sein. Während des Straßeneinbaus ist es besonders vorteilhaft, wenn der elektrische Verbraucher mittels des als interne Stromquelle vorliegenden Energiespeichers direkt, d.h. nicht durch einen ggf. vom PVG angetriebenen Generator, bestromt werden kann. Bei der externen Stromquelle kann es sich um eines der vorangehend genannten Beispiele handeln.

Das Versorgen des elektrischen Verbrauchers mittels der externen Stromquelle kann während eines Ladevorgangs des als interne Stromquelle eingesetzten Energiespeichers vorteilhaft sein. Dadurch kann der Ladevorgang verkürzt werden. Vorstellbar in diesem Zusammenhang wäre es, dass während eines Ladevorgangs des Energiespeichers automatisch eine Bestromung des elektrischen Verbrauchers über die zum Laden des Energiespeichers eingesetzte externe Stromquelle und/oder mittels einer anderen an der Straßenbaumaschine eingesetzten internen Stromquelle, beispielsweise einen Generator oder eine Ersatzbatterie, geschieht. Dies führt zu einer unterbrechungsfreien Betriebsbereitschaft des elektrischen Verbrauchers.

Das Energieversorgungssystem kann mindestens eine elektrische Leitung aufweisen, wodurch der elektrische Verbraucher an der internen Stromquelle angeschlossen wird. Das Energieversorgungssystem kann mindestens eine elektrische Leitung aufweisen, wodurch der elektrische Energiespeicher mit der externen Stromquelle verbindbar ist. Für einen Betrieb des elektrischen Verbrauchers mittels der externen Stromquelle wäre es denkbar, dass die beiden Leitungen miteinander überbrückbar sind.

Gemäß einer Ausführungsform der Erfindung ist die zum Verbinden des Energiespeichers mit dem elektrischen Verbraucher eingesetzte Leitung sowohl zum Stromtransport als auch zum Datentransport ausgebildet, liegt sozusagen als Powerline vor. Damit wäre es möglich, Daten, die eine Funktionalität des Verbrauchers angeben, beispielsweise einen daran gemessenen Temperaturverlauf, und/oder energiespeicherbezogene Daten, beispielsweise dessen Ladezustand, zur Auswertung an eine Steuerung, insbesondere an ein Lademanagementsystem, der Straßenbaumaschine weiterzuleiten. Denkbar wäre es, dass solche Daten zum Erstellen eines Baustellenprotokolls auch an eine externe Einrichtung, beispielsweise an eine Datenverwaltungseinrichtung des Baustellenbetreibers, gesendet werden.

In einer Variante der Erfindung umfasst das Energieversorgungssystem mindestens einen Frequenzumrichter, einen DC-DC Wandler und/oder einen DC-AC Wandler. Bei dem Frequenzumrichter kann es sich um einen Stromrichter handeln, der eine Frequenz und Amplitude einer Eingangswechselspannung in eine andere Frequenz und Amplitude einer Ausgangsspannung umwandelt. Bei dem DC-DC-Wandler, auch Gleichspannungswandler genannt, kann es sich um einen Stromrichter handeln, der eine am Eingang zugeführte Gleichspannung in eine Gleichspannung mit höherem, niedrigerem oder invertiertem Spannungsniveau umwandelt. Bei dem DC-AC-Wandler kann es sich um einen Stromrichter bzw. Wechselrichter handeln, der die Gleichspannung in Wechselspannung umwandelt. Der Frequenzumrichter, der DC-DC Wandler und/oder der DC-AC Wandler kann dazu konfiguriert sein, die Eingangsspannung beispielweise von 380V oder 400V oder 800 V herunterzuregeln auf eine für den Betrieb des elektrischen Verbrauchers geeignete Spannung von beispielweise 12V oder 24V oder 48V.

Der Frequenzumrichter, der DC-DC Wandler und/oder der DC-AC Wandler können im Stromversorgungspfad zwischen dem Energiespeicher und dem elektrischen Verbraucher integriert sein. Vorstellbar ist es, dass der Frequenzumrichter, der DC-DC Wandler und/oder der DC-AC Wandler auch für eine Bestromung des elektrischen Verbrauchers mittels der externen Stromquelle eingesetzt werden, sozusagen sowohl für die interne als auch für externe Energieversorgung des elektrischen Verbrauchers genutzt werden können.

In einer Variante der Erfindung ist der elektrische Verbraucher ein DC-Verbraucher, der durch Gleichstrom betrieben wird. Alternativ ist der elektrische Verbraucher ein AC-Verbraucher, der durch Wechselstrom betrieben wird. In einer Variante ist der elektrische Verbraucher beides, sprich für einen DC- und für einen AC-Betrieb konfiguriert. Vorstellbar wäre es, dass der Verbraucher für die interne Stromquelle als DC-Verbraucher und für die externe Stromquelle als AC-Verbraucher vorliegt.

In einer Variante der Erfindung ist der elektrische Verbraucher ein DC-Verbraucher und der elektrische Verbraucher ist über den DC-DC-Wandler an den elektrischen Energiespeicher angeschlossen.

In einer Variante der Erfindung ist der elektrische Verbraucher ein AC-Verbraucher und der elektrische Verbraucher ist über den Frequenzumrichter an den elektrischen Energiespeicher angeschlossen.

In einer Variante der Erfindung ist der elektrische Verbraucher ein AC-Verbraucher und der elektrische Verbraucher ist über den DC-AC-Wandler an den elektrischen Energiespeicher angeschlossen.

In einer Variante der Erfindung umfasst das Energieversorgungssystem ein AC-DC Lademanagementsystem und/oder ein AC Lademanagementsystem. Der elektrische Verbraucher oder der elektrische Energiespeicher kann direkt mit dem AC-DC und/oder mit dem AC Lademanagementsystem verbunden sein. Das Lademanagementsystem kann zur Steuerung eines Ladevorgangs des elektrischen Energiespeichers und/oder einer direkten Stromversorgung des elektrischen Verbrauchers dienen. Das Lademanagementsystem kann sicherstellen, dass eine Leistungs-Grenze des elektrischen Verbrauchers und/oder elektrischen Energiespeichers nicht überschritten wird.

Erfindungsgemäß weist die Straßenbaumaschine ein Pumpenverteilergetriebe sowie daran angeschlossene Hydraulikpumpen auf, wobei elektrische Energiespeicher im Energieversorgungssystem für eine vom Betrieb des Pumpenverteilergetriebes unabhängige Stromversorgung des elektrischen Verbrauchers ausgebildet ist. Der elektrische Verbraucher und das Pumpenverteilergetriebe können somit an der Straßenbaumaschine voneinander isoliert betrieben werden, sprich sie können in separaten Energieversorgungspfaden eingebunden sein. Der elektrische Verbraucher und das Pumpenverteilergetriebe können demzufolge voneinander energetisch getrennt versorgt werden.

Insbesondere liegt ein direkter Akkubetrieb des elektrischen Verbrauchers vor. Der elektrische Verbraucher kann ein DC-Verbraucher sein. Die Stromart und die Stromstärke aus dem Energiespeicher kann gewandelt, sprich genau an die Betriebsbedingungen des elektrischen Verbrauchers angepasst sein.

In einer Variante der Erfindung weist das Energieversorgungssystem eine Steuerung auf, die dazu konfiguriert, einen Ladezustand des Energiespeichers, beispielsweise über die als Powerline ausgebildete Leitung, zu überwachen und/oder über einen Schalter einen Ladevorgang des elektrischen Energiespeichers zu steuern und/oder die Versorgung des elektrischen Verbrauchers mit elektrischem Strom in Abhängigkeit eines Ladezustands des elektrischen Energiespeichers zu steuern.

Die Steuerung kann dazu konfiguriert sein, die Versorgung des elektrischen Verbrauchers von einer internen Versorgung durch den elektrischen Energiespeicher zu einer externen Versorgung durch die externe Stromquelle umzuschalten, wenn der Ladezustand des elektrischen Energiespeichers unter einen vorbestimmten Schwellwert fällt. Dadurch kann versichert werden, dass ein Einbaumischgut eine gewünschte Einbautemperatur hält.

Die Steuerung kann insbesondere dazu konfiguriert sein, den Ladevorgang des elektrischen Energiespeichers nur dann zu starten, wenn der Ladezustand des elektrischen Energiespeichers unter einen vorbestimmten Wert fällt. Damit kann die Leistungsdichte des elektrischen Energiespeichers besser auf einem gleichbleibenden, hohen Niveau gehalten werden.

In einer Variante der Erfindung weist das Energieversorgungssystem mindestens einen mit der Steuerung verbundenen, zum Erfassen einer Temperatur des Einbaumaterials, des elektrischen Verbrauchers und/oder des Arbeitsaggregats ausgebildeten Temperatursensor auf. Der Temperatursensor kann auf dem Arbeitsaggregat angeordnet oder daran als integraler Bestandteil ausgebildet sein. Der Temperatursensor kann im elektrischen Verbraucher integriert sein.

In einer Variante der Erfindung kann die Steuerung dazu konfiguriert sein, über einen Schalter die Versorgung des elektrischen Verbrauchers mit elektrischem Strom zu aktivieren und deaktivieren. Denkbar wäre es, dass zum Einsparen von Strom der elektrische Verbraucher in vorbestimmten Schaltintervallen bestrombar ist. Beispielsweise könnten Bestromungsunterbrechungen tendenziell während der Einbaufahrt zunehmen. Dahinter steht der Gedanke, dass sich die Straßenbaumaschine insgesamt während der Einbaufahrt durch Abwärme einzelner darin verbauter Aggregate erwärmt, sprich auch das erfindungsgemäß beheizbare Aggregat von dieser Wärmebilanz profitiert.

In einer Variante der Erfindung ist die Straßenbaumaschine ein Straßenfertiger, wobei der elektrische Verbraucher eine Heizeinrichtung und das Arbeitsaggregat eine Einbaubohle des Straßenfertigers sind, wobei die Heizeinrichtung zum Heizen mindestens einer Komponente der Einbaubohle ausgebildet ist. Die Steuerung kann dazu konfiguriert sein, eine dynamische Temperaturregelung und/oder eine Leistungsbegrenzung der Heizeinrichtung zur Verfügung zu stellen.

Vorzugsweise liegt der Energiespeicher am Straßenfertiger als Akkumulator vor. Somit ergibt sich eine akkubetriebene Heizeinrichtung für die Einbaubohle des Straßenfertigers. Der Akkumulator kann für die Heizeinrichtung die einzige interne Stromquelle auf dem Straßenfertiger sein.

Mittels der Komponente kann das heiße Einbaumischgut (Asphalt) insbesondere ausgebreitet, verdichtet und/oder geglättet werden. Durch das Beheizen der Komponente kann die Verarbeitungstemperatur des Einbaumischguts so lange aufrechterhalten werden, bis das Einbaumischgut als Straßenbelag eingebaut ist. Die Komponente kann ein Glättblech oder ein Tamper oder eine Preisleiste der Einbaubohle sein. Als beheizbares Arbeitsaggregat des Straßenfertigers kann auch ein Schneckenlagerbock, der an der Querverteilervorrichtung des Straßenfertigers gelagert ist oder eine andere Komponente der Querverteilervorrichtung, eine Fördereinrichtung und/oder ein Gutbunker in Frage kommen.

In einer Variante der Erfindung ist die Straßenbaumaschine ein Beschickerfahrzeug zum Fördern von Einbaumaterial zu einem Straßenfertiger ist, wobei der elektrische Verbraucher eine Heizeinrichtung und das Arbeitsaggregat eine Transporteinrichtung des Beschickerfahrzeugs sind, wobei die Heizeinrichtung zum Heizen mindestens einer Komponente der Transporteinrichtung des Beschickerfahrzeugs ausgebildet ist. Es kann dadurch vermieden werden, dass das Einbaumischgut abkühlt und/oder an dem Förderband anklebt. Als beheizbares Arbeitsaggregat des Beschickerfahrzeugs kommt auch ein Gutbunker des Beschickerfahrzeugs in Frage.

Vorzugsweise liegt der Energiespeicher am Beschickerfahrzeug als Akkumulator vor. Somit ergibt sich eine akkubetriebene Heizeinrichtung für die Transporteinrichtung des Beschickerfahrzeugs. Der Akkumulator kann für die Heizeinrichtung die einzige interne Stromquelle auf dem Beschickerfahrzeug sein.

In einer Variante der Erfindung umfasst die Straßenbaumaschine als Primärantriebsquelle einen E-Motor, einen Wasserstoffmotor, eine Brennstoffzelle, einen Verbrennungsmotor und/oder einen Hybridmotor. Es ist denkbar, dass der E-Motor von dem elektrischen Energiespeicher versorgt wird. Alternativ dazu könnte der E-Motor von einem gesonderten, an der Straßenbaumaschine eingesetzten elektrischen Energiespeicher mit Strom versorgt werden.

Der elektrische Energiespeicher kann den elektrischen Verbraucher und den E-Motor (Elektromotor) in voneinander getrennten, parallelen Energieversorgungspfaden mit elektrischem Strom versorgen. In einem System, in welchem die Primärantriebsquelle als ein E-Motor ausgebildet ist, kann der herkömmlicherweise von der Primärantriebsquelle der Straßenbaumaschine, insbesondere über ein Pumpenverteilergetriebe, angetriebene Generator als interne Stromquelle aus dem Energieversorgungssystem für den elektrischen Verbraucher isoliert oder ggf. aus der Straßenbaumaschine komplett entfernt werden. Somit ist ein verlustarmer direkter Betrieb des oder der elektrischen Verbraucher mittels des Energiespeichers möglich. Vorteilhaft bei solchen getrennten Energieversorgungspfaden ist vor allem, dass der elektrische Verbraucher unabhängig von einem, ggf. mit einem E-Motor, einem Verbrennungsmotor und/oder mit einem Wasserstoffmotor verbundenen, Pumpenverteilergetriebe (PVG) angetrieben werden kann. Das kann die Betriebszeit der Straßenbaumaschine erhöhen und sorgt für einen reduzierten Energie- bzw. Kraftstoffverbrauch. Es ist möglich, bei einem Hybridantrieb das PVG zum Beispiel mittels eines Verbrennungsmotors anzutreiben und in einem vom PVG getrennten Energieversorgungspfad den elektrischen Verbraucher mit Strom aus dem elektrischen Energiespeicher direkt, d.h. isoliert von dem PVG, zu versorgen. In diesem System wäre es parallel dennoch möglich, einen Generator, der bspw. von dem Verbrennungsmotor angetrieben wird, vorzusehen.

Insbesondere wird ein nicht zur Erfindung gehörendes Verfahren zum Versorgen des elektrischen Verbrauchers der Straßenbaumaschine zur Verfügung gestellt, wobei der elektrische Verbraucher von einer externen Stromquelle versorgt wird und/oder von dem an der Straßenbaumaschine verbauten als interne Stromquelle eingesetzten Energiespeicher versorgt wird, wobei die Energiespeicher von der externen Stromquelle aufgeladen werden kann.

Als interne Stromquelle kommt außer dem elektrischen Energiespeicher der Straßenbaumaschine, auch eine andere interne Stromquelle, beispielsweise ein Generator, zum Einsatz. Dieser kann einen oder mehrere Elektromotoren der Straßenbaumaschine mit elektrischem Strom versorgen.

Möglich wäre es, dass am Energiespeicher sowohl der elektrische Verbraucher als auch der oder die Elektromotoren über separate Energieversorgungspfade angeschlossen sind.

Vor allem kann der Energiespeicher als Akkumulator vorliegen, sodass der elektrische Verbraucher direkt akkubetrieben werden kann.

In einer nicht zur Erfindung gehörender Variante werden folgende Schritte durchgeführt: Überwachen einer Temperatur des Energiespeichers, des Verbrauchers, und/oder des Arbeitsaggregatsmittels eines Temperatursensors, Aktivieren der elektrischen Stromversorgung des elektrischen Verbrauchers zum Heizen des Arbeitsaggregats in Abhängigkeit der erfassten Temperatur über einen Schalter, so dass der elektrische Verbraucher Energiespeicher versorgt wird. Die vorangehend genannten Arbeitsschritte können mittels einer Steuerung der Straßenbaumaschine gesteuert werden.

Die Steuerung kann auch einen Ladezustand des elektrischen Energiespeichers überwachen, und mit Unterschreiten eines sollwertigen Ladezustands des elektrischen Energiespeichers die elektrische Versorgung des elektrischen Verbrauchers von dem elektrischen Energiespeicher trennen. In diesem Fall kann die Steuerung die elektrische Versorgung des elektrischen Verbrauchers in Abhängigkeit der erfassten Temperatur über einen zweiten Schalter einschalten, sodass der elektrische Verbraucher von der externen Stromquelle mit elektrischem Strom versorgt wird.

Sämtliche Merkmale, die in Zusammenhang mit der Straßenbaumaschine in Form eines Straßenfertigers oder eines Beschickerfahrzeugs zum Fördern von Einbaumaterial zu einem Straßenfertiger offenbart sind, können einzeln oder zusammen in dem Verfahren zum Versorgen eines elektrischen Verbrauchers einer Straßenbaumaschine zum Einsatz kommen. Sämtliche Merkmale, die in Zusammenhang mit dem Verfahren zum Versorgen eines elektrischen Verbrauchers einer Straßenbaumaschine offenbart sind, können einzeln oder zusammen in der Straßenbaumaschine in Form eines Straßenfertigers oder eines Beschickerfahrzeugs zum Fördern von Einbaumaterial zu einem Straßenfertiger zum Einsatz kommen.

Im Folgenden werden beispielhafte Ausführungsformen anhand der Figuren erläutert.

Dabei zeigt
Fig. 1 eine schematische Perspektivansicht einer Straßenbaumaschine in Form eines Straßenfertiges,
Fig. 2 eine schematische Perspektivansicht einer Straßenbaumaschine in Form eines Beschickerfahrzeugs zum Fördern von Einbaumaterial zu einem Straßenfertiger,
Fig. 3a-3c schematische Darstellungen von Varianten des erfindungsgemäßen Energieversorgungssystems der Straßenbaumaschine,
Fig. 4 eine schematische Darstellung einer Ausführungsform des Energieversorgungssystems,
Fig. 5 eine schematische Darstellung einer weiteren Ausführungsform des Energieversorgungssystems,
Fig. 6 eine schematische Darstellung einer weiteren Ausführungsform des Energieversorgungssystems,
Fig. 7 eine schematische Darstellung einer weiteren Ausführungsform des Energieversorgungssystems, und
Fig. 8 eine schematische Darstellung einer weiteren Ausführungsform des Energieversorgungssystems.

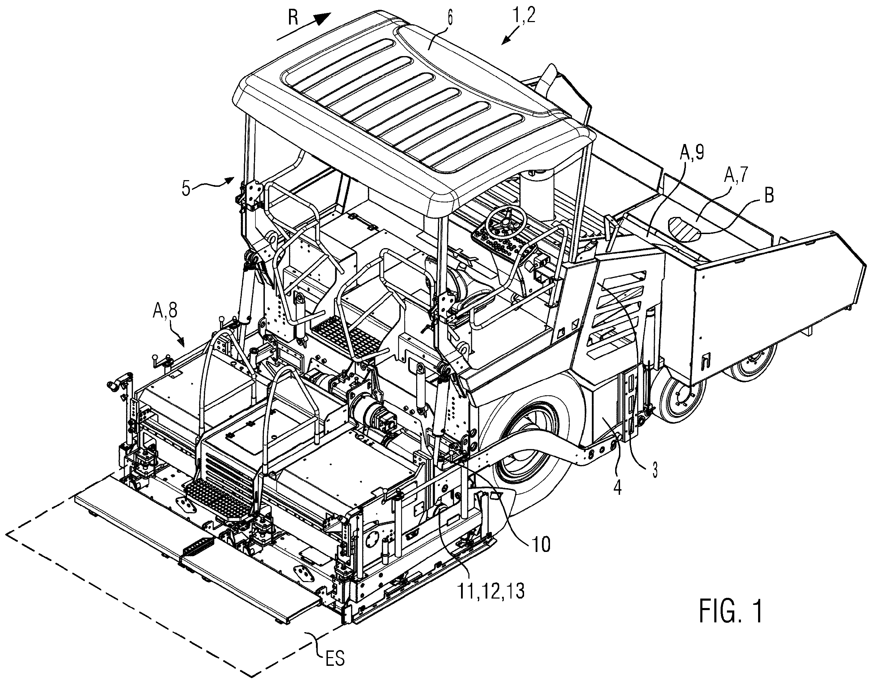

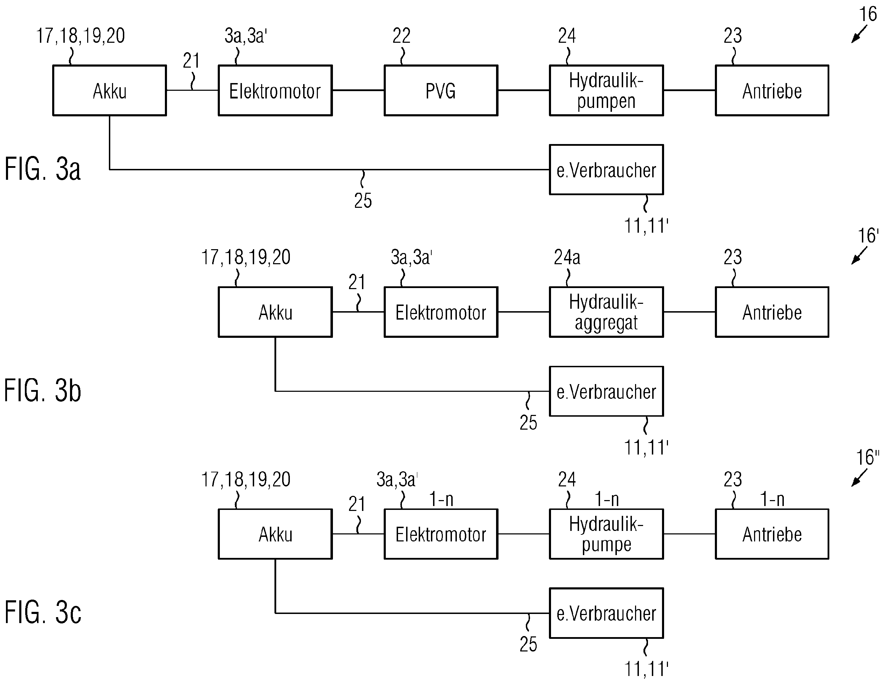

Figur 1 zeigt in perspektivischer Ansicht von schräg hinten eine Straßenbaumaschine 1, bei der es sich um einen Straßenfertiger 2 zur Herstellung einer Einbauschicht ES handelt. Der Straßenfertiger 2 ist selbstfahrend. Der Straßenfertiger 2 hat eine Primärantriebsquelle 3, ein Chassis 4, einen Bedienstand 5, ein Fahrerdach 6, Arbeitsaggregate A, wie einen Gutbunker 7 zur Aufnahme eines Einbaumaterials B (Asphaltmischgut), eine an dem Chassis 4 höhenverstellbar gelagerte und in Fahrtrichtung R geschleppte Einbaubohle 8, eine Fördereinheit 9, umfassend ein Förderband 9a, um das Einbaumaterial B aus einem Gutbunker 7 des Straßenfertigers 2 der Einbaubohle 8 zu einer Querverteilervorrichtung 10 der Straßenbaumaschine 1 zur Verfügung zu stellen. Die Primärantriebsquelle 3 kann ein Elektromotor 3a (Figur 3a) ein Wasserstoffmotor (nicht gezeigt), ein Verbrennungsmotor 3b, und/oder ein Hybridmotor 3c sein.

Der Straßenfertiger 2 verfügt über mindestens einen elektrischen Verbraucher 11 zum Heizen eines Arbeitsaggregats A.

Die Einbaubohle 8 ist in diesem Fall ein beheizbares Arbeitsaggregat A des Straßenfertigers 2. Die Einbaubohle 8 umfasst Komponenten 12 wie z.B. Verdichtungsaggregate (Glättbleche, Tamper und Preisleisten (nicht gezeigt)). Durch die Einwirkung des Eigengewichts des Verdichtungsaggregats wird das Einbaumaterial B verdichtet. Um zu verhindern, dass ein Einbaumaterial B an den Komponenten 12 der Einbaubohle 8 festklebt, sind an diesen Komponenten 12 Heizeinrichtungen 13 integriert. Die Heizeinrichtungen 13 sind elektrische Verbraucher 11 des Straßenfertigers 2.

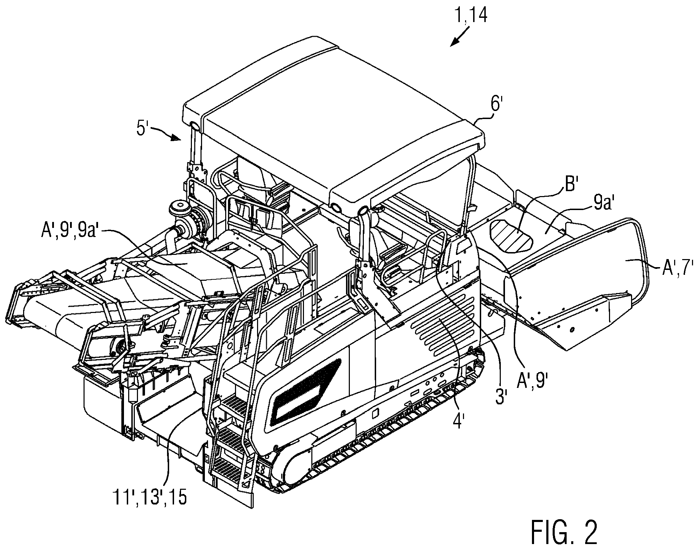

Figur 2 zeigt in perspektivischer Ansicht von schräg hinten eine Straßenbaumaschine 1, bei der es sich um ein Beschickerfahrzeug 14 zum Fördern von Einbaumaterial B' zu einem hinterherfahrenden Straßenfertiger 2 handelt. Das Beschickerfahrzeug 14 ist selbstfahrend und umfasst eine Primärantriebsquelle 3' ein Chassis 4', einen Bedienstand 5', ein Fahrerdach 6', Arbeitsaggregate A', wie z.B. einen Gutbunker 7' zur Aufnahme des Einbaumaterials B', sowie eine Fördereinheit 9', umfassend ein Förderband 9a', um das Einbaumaterial B', aus dem Gutbunker 7' des Beschickerfahrzeugs 14 in den Gutbunker 7' des Straßenfertigers 2 zu transportieren. Die Primärantriebsquelle 3' kann ein Elektromotor 3a', ein Wasserstoffmotor (nicht gezeigt), ein Verbrennungsmotor 3b', und/oder ein Hybridmotor 3c sein.

Das Beschickerfahrzeug 14 verfügt über mindestens einen elektrischen Verbraucher 11' als eine Heizeinrichtung 13' zum Heizen eines Arbeitsaggregats A'.

Das Förderband 9a' ist in diesem Fall ein beheizbares Arbeitsaggregat A' des Beschickerfahrzeugs 14. An dem Förderband 9a' ist mindestens eine Komponente 12' wie eine Förderbandheizung 15 als eine Heizeinrichtung 13' integriert. Die Förderbandheizung 15 ist ein elektrischer Verbraucher 11' des Beschickerfahrzeugs 14.

Figur 3a zeigt eine schematische Darstellung einer Ausführungsform des Energieversorgungssystems 16 der Straßenbaumaschine 1, 2, 14. Das Energieversorgungssystem 16 umfasst mindestens einen elektrischen Energiespeicher 17 als interne Stromquelle 18 der Straßenbaumaschine 1. Der elektrische Energiespeicher 17 ist ein Akkumulator 19 ("Akku"). Der Akkumulator 19 ist die Primärenergiequelle 20 der Straßenbaumaschine 1, 2, 14.

Der Akkumulator 19 versorgt den Elektromotor 3a, 3a' über einen ersten Stromversorgungspfad 21. Der Elektromotor 3a, 3a' treibt ein Pumpenverteilergetriebe 22 ("PVG") an. Das Pumpenverteilergetriebe 22 treibt wiederum weitere Antriebe 23 der Straßenbaumaschine 1 über Hydraulikpumpen 24 an.

Der Akkumulator 19 versorgt in einem zweiten Stromversorgungspfad 25, der getrennt von dem ersten Stromversorgungspfad 21 ist (d.h. ohne Umweg über das PVG), die elektrischen Verbraucher 11, 11' der Straßenbaumaschine 1. Anhand des zweiten Stromversorgungspfads 25 kann eine direkte Stromversorgung der elektrischen Verbraucher 11, 11 stattfinden.

In dem Fall, dass die Straßenbaumaschine 1 ein Straßenfertiger 2 ist, ist der elektrische Verbraucher 11 die in der Einbaubohle 8 verbaute Heizeinrichtung 13. In dem Fall, dass die Straßenbaumaschine 1 ein Beschickerfahrzeug 14 ist, ist der elektrische Verbraucher 11' die Förderbandheizung 15. Durch das Energieversorgungssystem 16 aus Figur 3a kann der Elektromotor 3a, 3a' außer Betrieb sein, wenn eine Heizleistung für die Arbeitsaggregate A, A' erforderlich ist. Die Arbeitsaggregate A, A' können also trotzdem mittels Akkubetrieb warmgehalten werden.

Figur 3b zeigt eine schematische Darstellung einer Ausführungsform des Energieversorgungssystems 16' der Straßenbaumaschine 1, 2, 14. Das Energieversorgungssystem 16' unterscheidet sich von dem in der Figur 3a dargestellten Energieversorgungssystem 16 dadurch, dass das Hydraulikaggregat 24a direkt vom Elektromotor 3a, 3a' angetrieben wird.

Figur 3c zeigt eine schematische Darstellung einer Ausführungsform des Energieversorgungssystems 16" der Straßenbaumaschine 1, 2, 14. Das Energieversorgungssystem 16" unterscheidet sich von dem in der Figur 3a dargestellten Energieversorgungssystem 16 dadurch, dass ggf. mehrere hydraulischen Aggregate 24 vom Elektromotor 3a, 3a' in parallelen Antriebssträngen angetrieben werden.

Die jeweiligen Energieversorgungssysteme 16, 16', 16" haben gemein, dass die elektrischen Verbraucher 11, 11' über den zweiten Stromversorgungspfad 25 direkt akkubetrieben sind.

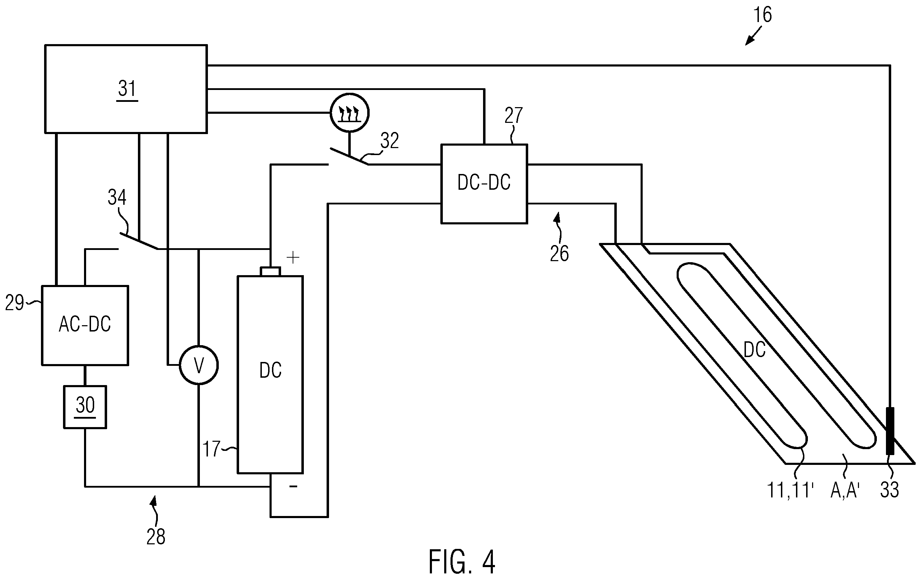

Figur 4 zeigt eine schematische Darstellung einer ersten Ausführungsform des Energieversorgungssystems 16 der Straßenbaumaschine 1, 2, 14. In der ersten Ausführungsform ist der elektrische Verbraucher 11, 11' ein DC-Verbraucher (Gleichstrom-Verbraucher) zum Heizen eines Arbeitsaggregats A, A' der Straßenbaumaschine 1. In einem ersten Stromkreis 26 ist der elektrische Verbraucher 11, 11' über einen DC-DC Wandler 27 an den elektrischen Energiespeicher 17 des Energieversorgungssystems 16 angeschlossen. Der DC-DC Wandler 27 sorgt dafür, dass ein eingangsseitiger elektrischer Strom an einen für den Betrieb des elektrischen Verbrauchers 11, 11' notwendigen Strom angepasst wird. In einem zweiten Stromkreis 28 ist der elektrische Energiespeicher 17 über ein AC-DC Lademanagementsystem 29 des Energieversorgungssystems 16 an einer externen Stromquelle 30 (beispielweise Stromnetz, oder Ladesäule oder Stromversorgungsaggregat eines Ladefahrzeugs oder Ladestation) angeschlossen. Das AC-DC Lademanagementsystem 29 sorgt dafür, dass ein eingangsseitiger elektrischer Strom von der externen Stromquelle 30 an einen für den Betrieb des elektrischen Energiespeichers 17 notwendigen Strom angepasst wird.

Eine Steuerung 31 des Energieversorgungssystems 16 kann über einen ersten Schalter 32 die Versorgung des elektrischen Verbrauchers 11, 11' mit Strom aus dem elektrischen Energiespeicher 17 wie gewünscht regeln, bzw. aktivieren oder deaktivieren. An dem Arbeitsaggregat A, A' ist ein Temperatursensor 33 angeordnet. Die Steuerung 31 kann eine Temperatur des Arbeitsaggregats A, A' überwachen und abhängig von dem gemessenen Temperaturwert die Versorgung des elektrischen Verbrauchers 11, 11' mit dem elektrischen Strom regeln. Die Steuerung 31 kann einen Ladezustand des elektrischen Energiespeichers 17 überwachen und den Ladevorgang dementsprechend über einen zweiten Schalter 34 regeln, bzw. aktivieren oder deaktivieren. Der elektrischen Verbraucher 11, 11' wird von dem elektrischen Energiespeicher 17 gespeist, wenn der erste Schalter 32 zu ist. Falls der Ladezustand unter einen Schwellenwert fällt, kann der elektrische Verbraucher 11, 11' direkt von der externen Stromquelle 30 gespeist werden, in dem der erste Schalter 32 und der zweite Schalter 34 zu sind.

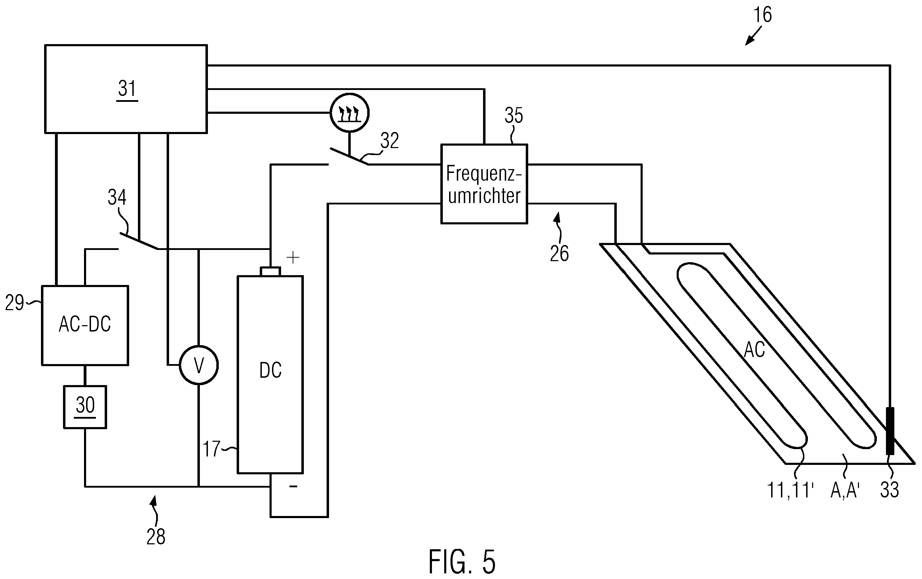

Figur 5 zeigt eine schematische Darstellung einer zweiten Ausführungsform des Energieversorgungssystems 16 der Straßenbaumaschine 1, 2, 14. Die zweite Ausführungsform unterscheidet sich von der ersten Ausführungsform darin, dass der elektrische Verbraucher 11, 11' ein AC-Verbraucher (Wechselstrom-Verbraucher) ist und über einen Frequenzumrichter 35 an dem elektrischen Energiespeicher 17 angeschlossen ist. Der Frequenzumrichter 35 sorgt dafür, dass ein eingangsseitiger elektrischer Strom an einen für den Betrieb des elektrischen Verbrauchers 11, 11' notwendigen Strom angepasst wird.

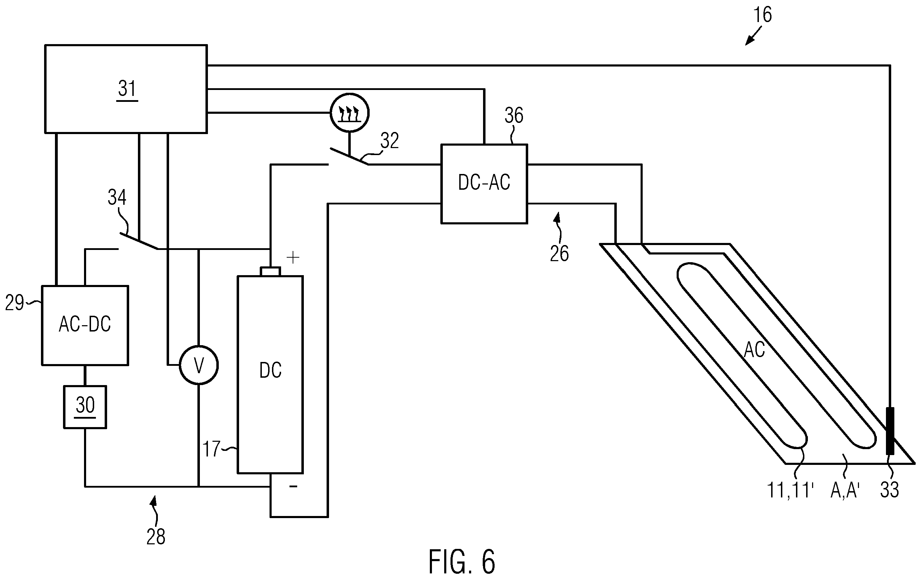

Figur 6 zeigt eine schematische Darstellung einer dritten Ausführungsform des Energieversorgungssystems 16 der Straßenbaumaschine 1, 2, 14. Die dritte Ausführungsform unterscheidet sich von der zweiten Ausführungsform darin, dass der elektrische Verbraucher 11, 11' über einen DC-AC Wandler 36 an dem elektrischen Energiespeicher 17 des Energieversorgungssystems 16 angeschlossen ist. Der DC-AC Wandler 36 sorgt dafür, dass ein eingangsseitiger elektrischer Strom an einen für den Betrieb des elektrischen Verbrauchers 11, 11' notwendigen Strom angepasst wird.

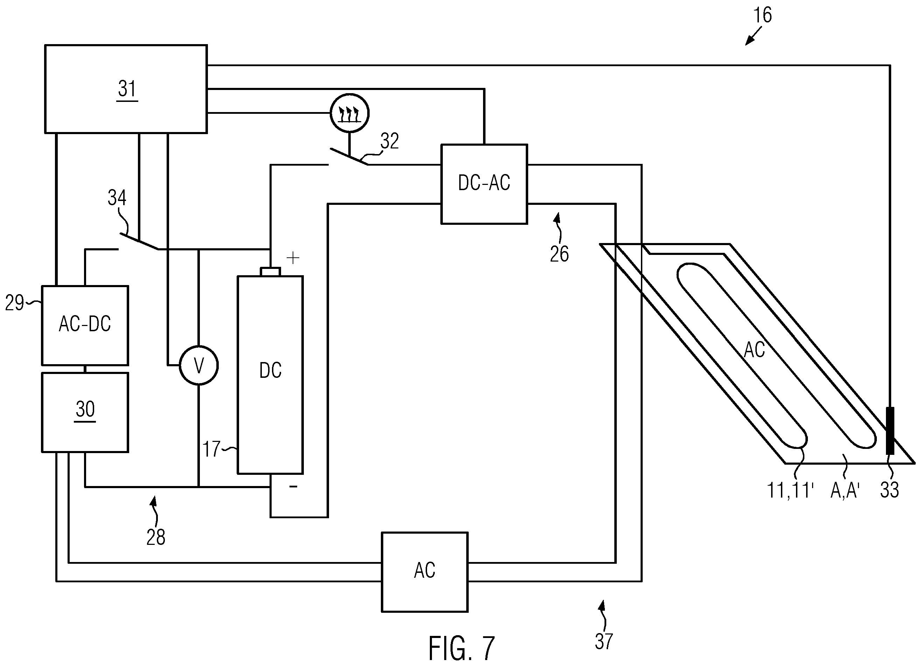

Figur 7 zeigt eine schematische Darstellung einer vierten Ausführungsform des Energieversorgungssystems 16 der Straßenbaumaschine 1, 2, 14. Die vierte Ausführungsform unterscheidet sich von der zweiten und dritten Ausführungsform darin, dass der elektrischen Verbraucher 11, 11' in einem dritten Stromkreis 37 über ein AC-Lademanagementsystem 38 an der externen Stromquelle 30 angeschlossen ist. Das AC-Lademanagementsystem 38 sorgt dafür, dass ein eingangsseitiger elektrischer Strom von der externen Stromquelle 30 an einen für den Betrieb des elektrischen Energiespeichers 17 notwendigen Strom angepasst wird. In dem dritten Stromkreis 37 ist ein dritter Schalter 39 vorgesehen. Die Steuerung 31 kann einen Ladezustand des elektrischen Energiespeichers 17 überwachen und zum Beispiel, wenn der Ladezustand des elektrischen Energiespeichers 17 unter einem vorbestimmten Schwellenwert ist, den ersten Schalter 32 ausschalten und den dritten Schalter 39 einschalten, um den elektrischen Versorger direkt von der externen Stromquelle 30 zu speisen.

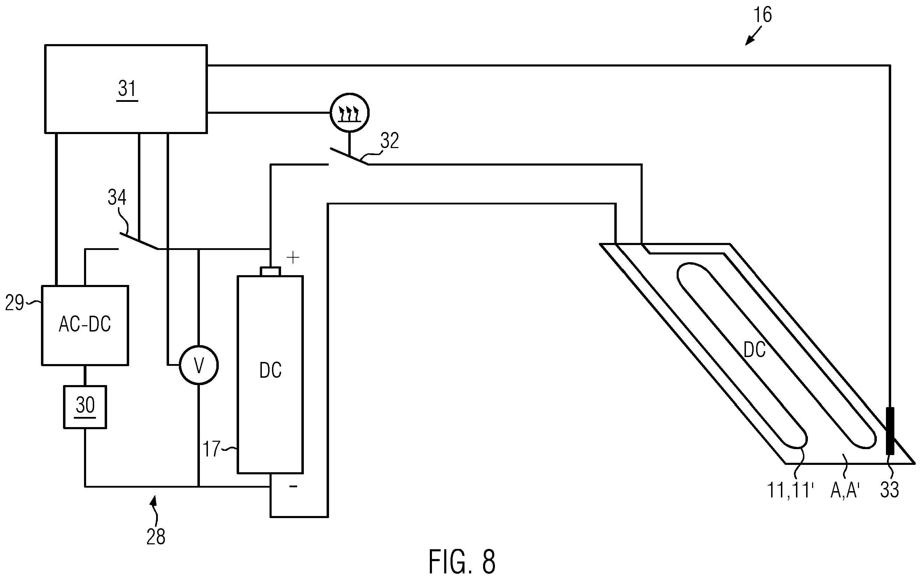

Figur 8 zeigt eine schematische Darstellung einer fünften Ausführungsform des Energieversorgungssystems 16 der Straßenbaumaschine 1, 2, 14. Die fünfte Ausführungsform unterscheidet sich von der ersten Ausführungsform darin, dass der elektrischen Verbraucher 11, 11' direkt an dem elektrischen Energiespeicher 17 des Energieversorgungssystems 16 angeschlossen ist. Hier versorgt der elektrische Energiespeicher 17 den elektrischen Verbraucher 11, 11' mit für den Betrieb des elektrischen Verbraucher 11, 11' notwendigem Strom.

## Patentansprüche

1. Straßenbaumaschine (1) in Form eines Straßenfertigers (2) oder eines Beschickerfahrzeugs (14) zum Fördern von Einbaumaterial (B, B') zu einem Straßenfertiger (2), wobei die Straßenbaumaschine (1) selbstfahrend ist und eine Primärantriebsquelle (3, 3'), einen Gutbunker (7, 7'), mindestens ein Arbeitsaggregat (A, A') und mindestens einen elektrischen Verbraucher (11, 11') zum Heizen des Arbeitsaggregats (A, A') aufweist, wobei die Straßenbaumaschine (1) ein Energieversorgungssystem (16) mit mindestens einem mittels außerhalb der Straßenbaumaschine (1) erzeugten elektrischen Stroms aufladbaren, elektrischen Energiespeicher (17) aufweist, **dadurch gekennzeichnet, dass** der Energiespeicher (17) an der Straßenbaumaschine (1) als interne Stromquelle (18) zur direkten Stromversorgung des elektrischen Verbrauchers (11, 11') vorliegt,
wobei die Straßenbaumaschine (1) ein Pumpenverteilergetriebe (22) sowie daran angeschlossene Hydraulikpumpen (24) aufweist, wobei der elektrische Energiespeicher (17) für eine vom Betrieb des Pumpenverteilergetriebes (22) unabhängige Stromversorgung des elektrischen Verbrauchers (11, 11') ausgebildet ist.

2. Straßenbaumaschine nach Anspruch 1, **dadurch gekennzeichnet, dass** der elektrische Verbraucher (11, 11') mittels des elektrischen Energiespeichers (17) unabhängig von einem Betrieb der Primärantriebsquelle (3, 3') bestrombar ist.

3. Straßenbaumaschine nach Anspruch 1 oder 2, **dadurch gekennzeichnet, dass** der elektrische Verbraucher (11, 11') direkt am elektrischen Energiespeicher (17) angeschlossen ist.

4. Straßenbaumaschine nach einem der vorangehenden Ansprüche, **dadurch gekennzeichnet, dass** der elektrische Energiespeicher (17) ein Akkumulator ist.

5. Straßenbaumaschine nach einem der vorangehenden Ansprüche, **dadurch gekennzeichnet, dass** das Energieversorgungssystem (16) zum Aufladen des elektrischen Energiespeichers (17) mit einer externen Stromquelle (30) verbindbar ist.

6. Straßenbaumaschine nach Anspruch 5, **dadurch gekennzeichnet, dass** das Energieversorgungssystem (16) dazu konfiguriert ist, den elektrischen Verbraucher (11, 11') mittels der externen Stromquelle (30) mit elektrischem Strom zu versorgen.

7. Straßenbaumaschine nach einem der vorangehenden Ansprüche, **dadurch gekennzeichnet, dass** das Energieversorgungssystem (16) mindestens einen Frequenzumrichter (35), einen DC-DC Wandler (27) und/oder einen DC-AC Wandler (36) umfasst.

8. Straßenbaumaschine nach einem der vorangehenden Ansprüche, **dadurch gekennzeichnet, dass** das Energieversorgungssystem (16) ein AC-DC Lademanagementsystem (29) und/oder ein AC Lademanagementsystem (38) aufweist.

9. Straßenbaumaschine gemäß einem der vorangehenden Ansprüche, **dadurch gekennzeichnet, dass** das Energieversorgungssystem (16) eine Steuerung (31) umfasst, die dazu konfiguriert ist, einen Ladezustand des elektrischen Energiespeichers (17) zu überwachen und/oder über einen Schalter (34) einen Ladevorgang des elektrischen Energiespeichers (17) zu steuern und/oder die Versorgung des elektrischen Verbrauchers (11, 11') mit elektrischem Strom in Abhängigkeit eines Ladezustands des elektrischen Energiespeichers (17) zu steuern.

10. Straßenbaumaschine nach Anspruch 9, **dadurch gekennzeichnet, dass** die Steuerung (31) mit einem zum Erfassen einer Temperatur des Einbaumaterials, des elektrischen Verbrauchers und/oder des Arbeitsaggregats (A, A') ausgebildeten Temperatursensor (33) verbunden ist, wobei die Steuerung (31) dazu konfiguriert ist, in Abhängigkeit der erfassten Temperatur mittels eines Schalters (32, 39) die Stromversorgung des elektrischen Verbrauchers (11, 11') zu steuern.

11. Straßenbaumaschine nach einem der vorangehenden Ansprüche, **dadurch gekennzeichnet, dass** die Straßenbaumaschine (1) ein Straßenfertiger (2) ist, wobei der elektrische Verbraucher (11, 11') eine Heizeinrichtung (13) und das Arbeitsaggregat (A, A') eine Einbaubohle (8) des Straßenfertigers (2) sind, wobei die Heizeinrichtung (13) zum Heizen mindestens einer Komponente (12) der Einbaubohle (8) des Straßenfertigers (2) ausgebildet ist.

12. Straßenbaumaschine nach einem der vorangehenden Ansprüche 1 bis 10, **dadurch gekennzeichnet, dass** die Straßenbaumaschine (1) ein Beschickerfahrzeug (14) zum Fördern von Einbaumaterial (B') zu einem Straßenfertiger (2) ist, wobei der elektrische Verbraucher (11, 11') eine Heizeinrichtung (13') und das Arbeitsaggregat (A, A') eine Transporteinrichtung des Beschickerfahrzeugs (14) sind, wobei die Heizeinrichtung (13') zum Heizen mindestens einer Komponente der Transporteinrichtung des Beschickerfahrzeugs (14) ausgebildet ist.

13. Straßenbaumaschine nach einem der vorangehenden Ansprüche, **dadurch gekennzeichnet, dass** die Primärantriebsquelle (3, 3') der Straßenbaumaschine (1) ein E-Motor (3a, 3a'), ein Wasserstoffmotor, eine Brennstoffzelle, ein Verbrennungsmotor und/oder ein Hybridmotor ist.

## Claims

1. Road construction machine (1) in the form of a road paver (2) or a feeder vehicle (14) for conveying paving material (B, B') to a road paver (2), the road construction machine (1) being self-propelled and having a primary drive source (3, 3'), a hopper (7, 7'), at least one working unit (A, A') and at least one electric consumer (11, 11') for heating the working unit (A, A'), wherein the road construction machine (1) has an energy supply system (16) with at least one electrical energy storage (17) which can be charged by means of electric current generated externally to the road construction machine (1), **characterized in that** the electrical energy storage (17) is provided on the road construction machine (1) as an internal power source (18) for direct current supply to the electric consumer (11, 11'),
wherein the road construction machine (1) comprises a pump transfer gearbox (22) and hydraulic pumps (24) connected thereto, the electrical energy storage (17) being configured for supplying power to the electric consumer (11, 11') independently of the operation of the pump transfer gearbox (22).

2. Road construction machine according to claim 1, **characterized in that** the electric consumer (11, 11') can be supplied with current by means of the electrical energy storage (17) independently of an operation of the primary drive source (3, 3').

3. Road construction machine according to claim 1 or 2, **characterized in that** the electric consumer (11, 11') is directly connected to the electrical energy storage (17).

4. Road construction machine according to one of the preceding claims, **characterized in that** the electrical energy storage (17) is a battery.

5. Road construction machine according to one of the preceding claims, **characterized in that** the energy supply system (16) is connectable to an external power source (30) for charging the electrical energy storage (17).

6. Road construction machine according to claim 5, **characterized in that** the energy supply system (16) is configured to supply electric current to the electric consumer (11, 11') by means of the external power source (30).

7. Road construction machine according to one of the preceding claims, **characterized in that** the energy supply system (16) comprises at least one frequency converter (35), one DC-DC converter (27) and/or one DC-AC converter (36).

8. Road construction machine according to one of the preceding claims, **characterized in that** the energy supply system (16) comprises an AC-DC charge management system (29) and/or an AC charge management system (38).

9. Road construction machine according to one of the preceding claims, **characterized in that** the energy supply system (16) comprises a controller (31) configured to monitor a charging state of the electrical energy storage (17) and/or to control a charging process of the electrical energy storage (17) via a switch (34) and/or to control the supply of electric current to the electric consumer (11, 11') as a function of a charging state of the electrical energy storage (17).

10. Road construction machine according to claim 9, **characterized in that** the controller (31) is connected to a temperature sensor (33) configured to detect a temperature of the paving material, the electric consumer and/or the working unit (A, A'), wherein the controller (31) is configured to control the current supply of the electric consumer (11, 11') by means of a switch (32, 39) depending on the detected temperature.

11. Road construction machine according to one of the preceding claims, **characterized in that** the road construction machine (1) is a road paver (2), the electric consumer (11, 11') being a heating device (13) and the working unit (A, A') being a paving screed (8) of the road paver (2), the heating device (13) being configured for heating at least one component (12) of the paving screed (8) of the road paver (2).

12. Road construction machine according to one of the preceding claims 1 to 10, **characterized in that** the road construction machine (1) is a feeder vehicle (14) for conveying paving material (B') to a road paver (2), the electric consumer (11, 11') being a heating device (13') and the working unit (A, A') being a transport device of the feeder vehicle (14), the heating device (13') being configured for heating at least one component of the transport device of the feeder vehicle (14).

13. Road construction machine according to one of the preceding claims, **characterized in that** the primary drive source (3, 3') of the road construction machine (1) is an electric motor (3a, 3a'), a hydrogen engine, a fuel cell, an internal combustion engine and/or a hybrid engine.

## Revendications

1. Machine de construction routière (1) sous la forme d'un finisseur routier (2) ou d'un véhicule de chargement (14) permettant d'amener du matériau d'œuvre (B, B') à un finisseur routier (2), dans laquelle la machine de construction routière (1) est automotrice et présente une source d'entraînement primaire (3, 3'), une trémie (7, 7'), au moins un bloc de travail (A, A') et au moins un consommateur électrique (11, 11') permettant de chauffer le bloc de travail (A, A'), dans laquelle la machine de construction routière (1) présente un système d'alimentation en énergie (16) avec au moins un dispositif de stockage d'énergie électrique (17) pouvant être chargé au moyen d'un courant électrique généré à l'extérieur de la machine de construction routière (1), **caractérisée en ce que** le dispositif de stockage d'énergie (17) est présent sur la machine de construction routière (1) sous la forme d'une source d'énergie interne (18) permettant d'alimenter directement en électricité le consommateur électrique (11, 11'),
dans laquelle la machine de construction routière (1) présente un réducteur de distribution de pompe (22) ainsi que des pompes hydrauliques (24) raccordées audit réducteur, dans laquelle le dispositif de stockage d'énergie électrique (17) est conçu pour une alimentation électrique du consommateur électrique (11, 11') indépendante du fonctionnement du réducteur de distribution de pompe (22).

2. Machine de construction routière selon la revendication 1, **caractérisée en ce que** le consommateur électrique (11, 11') peut être alimenté au moyen du dispositif de stockage d'énergie électrique (17) indépendamment du fonctionnement de la source d'entraînement primaire (3, 3').

3. Machine de construction routière selon la revendication 1 ou 2, **caractérisée en ce que** le consommateur électrique (11, 11') est raccordé directement au dispositif de stockage d'énergie électrique (17).

4. Machine de construction routière selon l'une quelconque des revendications précédentes, **caractérisée en ce que** le dispositif de stockage d'énergie électrique (17) est un accumulateur.

5. Machine de construction routière selon l'une quelconque des revendications précédentes, **caractérisé en ce que** le système d'alimentation en énergie (16) peut être relié à une source d'énergie externe (30) afin de charger le dispositif de stockage d'énergie électrique (17).

6. Machine de construction routière selon la revendication 5, **caractérisée en ce que** le système d'alimentation en énergie (16) est configuré pour alimenter le consommateur électrique (11, 11') en courant électrique au moyen de la source de courant externe (30).

7. Machine de construction routière selon l'une quelconque des revendications précédentes, **caractérisée en ce que** le système d'alimentation en énergie (16) comprend au moins un convertisseur de fréquence (35), un convertisseur CC-CC (27) et/ou un convertisseur CC-CA (36).

8. Machine de construction routière selon l'une quelconque des revendications précédentes, **caractérisée en ce que** le système d'alimentation en énergie (16) présente un système de gestion de charge CA-CC (29) et/ou un système de gestion de charge CA (38).

9. Machine de construction routière selon l'une quelconque des revendications précédentes, **caractérisée en ce que** le système d'alimentation en énergie (16) comprend une commande (31) configurée pour surveiller un état de charge du dispositif de stockage d'énergie électrique (17) et/ou pour commander une opération de charge du dispositif de stockage d'énergie électrique (17) par l'intermédiaire d'un commutateur (34) et/ou pour commander l'alimentation en courant électrique du consommateur électrique (11, 11') en fonction d'un état de charge du dispositif de stockage d'énergie électrique (17).

10. Machine de construction routière selon la revendication 9, **caractérisée en ce que** la commande (31) est reliée à un capteur de température (33) conçu pour détecter une température du matériau d'œuvre, du consommateur électrique et/ou du bloc de travail (A, A'), dans laquelle la commande (31) est configurée pour commander l'alimentation en courant du consommateur électrique (11, 11') au moyen d'un commutateur (32, 39) en fonction de la température détectée.

11. Machine de construction routière selon l'une quelconque des revendications précédentes, **caractérisée en ce que** la machine de construction routière (1) est un finisseur routier (2), dans laquelle le consommateur électrique (11, 11') est un dispositif de chauffage (13) et le bloc de travail (A, A') est une table de pose (8) du finisseur routier (2), dans laquelle le dispositif de chauffage (13) est conçu pour chauffer au moins un composant (12) de la table de pose (8) du finisseur routier (2).

12. Machine de construction routière selon l'une quelconque des revendications précédentes 1 à 10, **caractérisée en ce que** la machine de construction routière (1) est un véhicule de chargement (14) permettant d'amener du matériau d'œuvre (B') à un finisseur routier (2), dans laquelle le consommateur électrique (11, 11') est un dispositif de chauffage (13') et le bloc de travail (A, A') est un dispositif de transport du véhicule de chargement (14), dans laquelle le dispositif de chauffage (13') est conçu pour chauffer au moins un composant du dispositif de transport du véhicule de chargement (14).

13. Machine de construction routière selon l'une quelconque des revendications précédentes, **caractérisée en ce que** la source d'entraînement primaire (3, 3') de la machine de construction routière (1) est un moteur électrique (3a, 3a'), un moteur à hydrogène, une pile à combustible, un moteur à combustion interne et/ou un moteur hybride.
